# EUROPEAN PATENT APPLICATION

(11) **EP 4 725 358 A2**
(43) Date of publication of application: **15.04.2026**
(21) Application number: 26161550.4
(22) Date of filing: 25.01.2024
(51) Int. Cl.: A46B 5/00

(54) **ELECTRIC TOOTHBRUSH WITH ANGLED BRUSH HEAD**

(30) Priority: 30.01.2023 EP 23153929
(62) Divisional of application: 24702122.3
(71) Applicant: Unilever IP Holdings B.V., 6708 WH Wageningen (NL); Unilever Global IP Limited, Wirral, Merseyside CH62 4ZD (GB)
(72) Inventor: CHERIAN, Babu, 6708 WH Wageningen (NL); SAVILL, Derek Guy, 6708 WH Wageningen (NL); THAKKAR, Nishit Mukesh, 6708 WH Wageningen (NL)
(74) Representative: Unilever Patent Group

(57) **Abstract**

The invention relates to a replaceable head (3) is provided for removable attachment to a handle (2) of an electric toothbrush (1). The head comprises three linear segments (4, 5, 6) angled with respect to each other. A first segment (4) at a remote end (7) carries tufts of bristles (8). A second segment (5) at a proximate end (9) defines a neck and includes attachment means for removable coupling to the handle. A third segment (6) lies between the first and second segments. The third segment forms an angle (α) of 1 to 30° with a reference plane of the first segment and an angle (β) of 1 to 40° with a reference plane of the second segment, and defines an internal angle (δ) of 130 to 179° relative to the reference plane of the second segment. The first and second segments project upwardly and inwardly with respect to the third segment to define the angled profile.

## Description

### Field of the Invention

The present invention relates to electric toothbrushes.

### Background of the Invention

Electric toothbrushes are well known in the art and generally comprise a motor housed within the brush handle and a head, which may be replaceable.

Most electric brushes effect cleaning by rapidly moving the brush head (hereinafter known as oscillating brushes) but some merely vibrate (hereinafter known as vibrating brushes).

There are many kinds of oscillating brushes in the market and some have particular oscillating patterns, e. g. longitudinally oscillating elements, or they may have multiple brush heads which comprises a rotating head and a laterally oscillating array of bristles distal to the brush handle.

Manual brushes with flexible heads are also well known.

A disadvantage of oscillating brushes is that the electrical devices required for proper brushing of the teeth are expensive. A disadvantage of the vibrating brushes, which are usually cheaper, is that they need to vibrate considerably to clean. Such vibration is often uncomfortable for the user as the handle often vibrates as much as the head.

US2015289639 A1 (Dr. Fresh LLC) discloses a toothbrush including a handle, head having bristles and a neck portion. The neck portion is curved and is angled away from an axis of the handle and is then angled in a direction towards the axis.

US6948209 B2 (P&G, 2005) discloses an electric toothbrush with flexible neck for lateral, rearward, and forward flexibility of a brush head, which is achieved by use of polymer blends. By utilizing a mixture of polymers in the neck, various degrees of flexibility in the region of the neck may be achieved.

US2017143460 A1 (Latikka Lauri) discloses a brush head for an electric toothbrush, having a hollow body part, a *back-and-forth* rotating shaft inside the body part, and a rotating bristle carrier rotated back and forth by the shaft at the first end of the body part. The second end of the shaft comprises a protrusion inclined at 20 to 70° with the rotation axis of the shaft. The inclination is directed towards the rotation axis of the shaft.

US6353959 B1 (Thomas Andrew, 2002) discloses a toothbrush suitable for use by an individual in brushing another's teeth, as well as own teeth. The toothbrush includes a handle, a neck and a bristle head which is at an angle to the neck. The handle has indentations to permit the fingers of the user to more easily grip and guide the brush, and the bristlehead is an oval rounded head with bristles therein. The toothbrush moves throughout the mouth, thereby facilitating effective brushing as a person uses the brush to clean the teeth and gums of another. The toothbrush has oval shaped bristle head extending from the neck at 142 to 155°.

WO0074522 A1 (Unilever) discloses an electric toothbrush having a flexible head.

The inner dental arch can be awkward and difficult to access with traditional electric toothbrush because the neck and head of the brush are in line with the handle of the brush. To overcome this difficulty and to make it easier to place the electric toothbrush head on all teeth surfaces, the present inventors have observed that an electric toothbrush of the invention makes it easier to access almost all region of the mouth such that those with manual dexterity challenges could also be able to clean the teeth more effectively and easily. The areas seen as most challenging to access are the inner upper and lower arch and the teeth at the back of the mouth. Making the access easier means that the user can gain more control over the movements and the force applied whilst brushing.

### Summary of the Invention

In accordance with a first aspect disclosed is a toothbrush (1) comprising:
a) a handle (2) having upper surface (2a) and lower surface (2b); and,
b) a replaceable head (3) removably attachable to said handle (2),
   wherein,
   said replaceable head (3) comprises three linear segments (4, 5, 6) angled with respect to each other, where:
   i) a first segment (4) is at an end (7) remote from said handle (2) and comprises tufts of bristles (8);
   ii) a second segment (5) defines the neck of said head (3) at an end (9) proximate said handle (2), and comprises means for removable attachment with said handle (2); and
   iii) a third segment (6) is between said first segment (4) and second segment (5), and,
      where said handle (2) is defined by a first reference plane X'-X" orthogonal to the handle and a second reference plane Y'-Y" abutting the handle at its lower surface (2b) and perpendicular to X'-X",
      where said third segment (6) forms:
         A. an angle (α) of 1 to 30° with a reference plane 4'-4" of said first segment (4) abutting its lower side (4a);
         B. an angle (β) of 1 to 40° with a reference plane 5'-5" of said second segment (5) abutting its lower side (5a); and,
         C. the reference plane 5'-5" of said second segment (5) abutting its lower side forms an angle (γ) of 1 to 50° with respect to said first reference plane (X'-X").
            where said first and second segments (4, 5) project upwardly and inwardly with respect to said first reference plane (X'-X") to define said angles (α), (β) and (γ),
            wherein
            said toothbrush is an electric toothbrush.

In accordance with a with a second aspect disclosed is a replaceable head (3) for removable attachment with a handle (2) of an electric toothbrush (1), said head (3) comprising three linear segments (4, 5, 6) angled with respect to each other, where:
i) a first segment (4) is at an end (7) remote from said handle (2) and comprises tufts of bristles (8);
ii) a second segment (5) defines the neck of said head (3) at an end (9) proximate said handle (2), and comprises means for removable attachment with said handle (2); and
iii) a third segment (6) is between said first segment (4) and second segment (5), and where said third segment (6) forms:
   a. an angle (α) of 1 to 30° with a reference plane 4'-4" of said first segment (4) abutting its lower side (4a);
   b. an angle (β) of 1 to 40° with a reference plane 5'-5" of said second segment (5) abutting its lower side (5a); and,
   c. an internal angle (δ) of 130 to 179° with respect to the reference plane 5'-5" of said second segment (5),
      where said first and second segments (4, 5) project upwardly and inwardly with respect to said third segment (6) to define said angles (α), (β) and (δ).

In accordance with a third aspect disclosed is a kit-of-parts of an electric toothbrush (1), comprising:
a) a handle (2); and,
b) a replaceable head (3) removably attachable to said handle (2), and,
c) optionally a battery, a charging cable and a set of instructions,
   wherein,
   said replaceable head (3) comprises comprising three linear segments (4, 5, 6) angled with respect to each other, where:
   i) a first segment (4) is at an end (7) remote from said handle (2) and comprises tufts of bristles (8);
   ii) a second segment (5) defines the neck of said head (3) at an end (9) proximate said handle (2), and comprises means for removable attachment with said handle (2); and
   iii) a third segment (6) is between said first segment (4) and second segment (5), and where said third segment (6) forms:
      A. an angle (α) of 1 to 30° with a reference plane 4'-4" of said first segment (4) abutting its lower side (4a);
      B. an angle (β) of 1 to 40° with a reference plane 5'-5" of said second segment (5) abutting its lower side (5a); and,
      C. an internal angle (δ) of 130 to 179° with respect to the reference plane 5'-5" of said second segment (5),
where said first and second segments (4, 5) project upwardly and inwardly with respect to said third segment (6) to define said angles (α), (β) and (δ).

### Detailed Description of the Invention

The invention relates to an electric toothbrush (1). The brush comprises a handle (2); and a replaceable head (3) removably attachable to the handle (2).

The head can be attached, and subsequently detached, from the handle. Therefore, the handle may be used in combination with variety of heads, thereby considerably extending the lifetime of the handle relative to known toothbrushes. A used head could be discarded, and the handle could be used for long time.

It is preferred that the cross-section of the handle is ergonomically adapted to be held comfortably in the hand.

The handle preferably comprises a thumb rest being made from a thermoplastic elastomer material and/or from a polypropylene material. These materials can be easily injection molded over the heavy resin material as discussed above. Such thumb rest may provide the handle of the brush with improved handling properties, e.g., with anti-slip properties to improve the maneuverability of the oral care implement under wet conditions, e.g., when the user brushes his teeth. The thumb rest may be made from thermoplastic elastomer having a Shore A hardness from about 30 to about 60, or about 40 to prevent the oral care implement from being too slippery when used in wet conditions.

It is preferred that the handle comprises a motor element which vibrates or oscillates the tufts of bristles (8). The head has a correspondingly movable bristles driven by the motor and a drive mechanism disposed within the cavity of the handle. Preferably a shaft is disposed within the flexible neck that is operatively connected to the movable bristle carrier and to the motor.

### The replaceable head

Preferably the head is made from a material of density 0.5 to 1.2 g/cm³ preferably 0.7 to 1.0 g/cm³. Preferably the head is injection molded from a thermoplastic polymer, e.g., polypropylene. On the other hand, it is preferred that the handle is made from a denser material of density 2.1 to 3.1 g/cm³, preferably 2.3 to about 2.8 g/cm³.

The replaceable head comprises first, second and third linear segments (4, 5, 6) angled with respect to each other. The first, second and third segments are continuous, i.e., without any break or connections between them and together the three segments form a continuous uninterrupted profile.

The replaceable head (3) is removably attachable to the handle (2). The replaceable head (3) comprises three linear segments (4, 5, 6) angled with respect to each other. The first segment (4) is at an end (7) remote from the handle (2) and comprises tufts of bristles (8).

The tufts may be attached to the head by means of a hot tufting process. One method of manufacturing the head with tufts of filaments embedded in the head may comprise the following steps: In a first step, tufts are formed by providing a desired amount of filaments. In a second step, the tufts are placed into a mold cavity so that ends of the filaments which are supposed to be attached to the head extend into said cavity. The opposite ends of the filaments not extending into said cavity may be either end-rounded or non-end-rounded. For example, the filaments may be not end-rounded in case the filaments are tapered filaments having a pointed tip. In a third step the head is formed around the ends of the filaments extending into the mold cavity by an injection molding process, thereby anchoring the tufts in the head. Alternatively, the tufts may be anchored by forming a first part of the head - a so called "sealplate" - around the ends of the filaments extending into the mold cavity by an injection molding process before the remaining part of the oral care implement is formed. Before starting the injection molding process the ends of the tufts extending into the mold cavity may be optionally melted or fusion-bonded to join the filaments together in a fused mass or ball so that the fused masses or balls are located within the cavity. The tufts may be held in the mold cavity by a mold bar having blind holes that correspond to the desired position of the tufts on the finished head of the oral care implement. In other words, the tufts attached to the head by means of a hot tufting process are not doubled over a middle portion along their length and are not mounted in the head by using an anchor/staple. The tufts are mounted on the head by means of an anchor-free tufting process.

Alternatively, the head may be provided with a bristle carrier having at least one tuft hole, e.g., a blind-end bore. A tuft comprising a plurality of filaments may be fixed/anchored in said tuft hole by a stapling process/anchor tufting method. This means, that the filaments of the tuft are bent/folded around an anchor, e.g., an anchor wire or anchor plate, for example made of metal, in a substantially U-shaped manner. The filaments together with the anchor are pushed into the tuft hole so that the anchor penetrates opposing side walls of the tuft hole thereby anchoring/fixing/fastening the filaments to the bristle carrier. The anchor may be fixed in opposing side walls by positive and frictional engagement. In case the tuft hole is a blind-end bore, the anchor holds the filaments against a bottom of the bore. **In** other words, the anchor may lie over the U-shaped bend in a substantially perpendicular manner. Since the filaments of the tuft are bent around the anchor in a substantially U-shaped configuration, a first limb and a second limb of each filament extend from the bristle carrier in a filament direction. Filament types which can be used/are suitable for usage in a stapling process are also called "two-sided filaments". Heads for oral care implements which are manufactured by a stapling process can be provided in a relatively low-cost and time-efficient manner.

The second segment (5) defines the neck of said head (3) at an end (9) proximate said handle (2), and comprises means for removable attachment with the handle (2).

The removal attachment could be provided by a variety of means.

Function of the removable attachment is to enable a user to inter-engage a replaceable head with the handle so that the brush becomes usable. After single use the implement may be kept aside, without dismantling, until the need arises next time. A head may need to be changed in case it is worn out or when the user may want to change for a related application, like tongue cleaning after brushing, with the same handle but changing the head.

In one aspect the handle comprises an insert and the second segment of the head comprises a receiving opening which together are inter-engageable for the removable attachment. Alternatively, the handle comprises a receiving opening and said second segment of the head comprises an insert and which together are inter-engageable for said removable attachment.

It is also preferred that the removable attachment comprises press-fitting means, screw threads, bayonet or magnetic means for attachment with correspondingly configured head.

In one aspect it is preferred that the removable attachment in the handle comprises a shaft provided with a card slot and the corresponding head has an elastic clip provided on a cavity wall of the connection cavity where the elastic clip can be engaged with the card slot.

Alternatively, the removable attachment comprises a bayonet element and a socket; the bayonet being comprised in the handle and the socket being formed within the head. The socket preferably comprises an axis, an opening and first and second channels which channels are positioned transversely opposite one another, wherein each channel comprises: a first channel portion extending axially from the opening and having a first transverse dimension, and a second channel portion extending axially from the first channel portion having a second transverse dimension larger than the first transverse dimension; and the bayonet element comprises an axis and first and second protrusions, which protrusions are positioned diametrically opposite one another, wherein each protrusion extends outwardly from the bayonet element, is axially receivable by a respective first channel portion and is transversely receivable by a respective second channel portion.

The bayonet element may be inserted into the socket by first aligning each of the first and second protrusions with the respective first channel portion and then moving the bayonet element axially into the socket. Once the bayonet element is moved axially into the socket such that each protrusion moves through the respective first channel portion and into the respective second channel portion, the bayonet element may be rotated about its axis relative to the socket such that each protrusion moves transversely across the respective second channel portion. The head can be removably attached to the handle when the bayonet is received by the socket.

The third segment (6) is between said first segment (4) and second segment (5).

The first and second segments (4, 5) project upwardly and inwardly with respect to said third segment (6) to define said angles (α), (β) and (δ). By upwardly and inwardly is meant that the segments (4, 5) are inclined in a direction oriented towards the brush head and tufts of bristles (8).

The handle (2) is defined by a first reference plane X'-X" orthogonal to the handle and a second reference plane Y'-Y" abutting the handle at its lower surface (2b) and perpendicular to X'-X".

Orthogonal also means perpendicular to and abutting implies touching or having a point of contact with just like a tangent touches a circle.

The third segment (6) of the head forms:
A. an angle (α) of 1 to 30° with a reference plane 4'-4" of said first segment (4) abutting its lower side (4a);
B. an angle (β) of 1 to 40° with a reference plane 5'-5" of said second segment (5) abutting its lower side (5a); and,
C. the reference plane 5'-5" of said second segment (5) abutting its lower side forms an angle (γ) of 1 to 60° with respect to said first reference plane (X'-X").
where said first and second segments (4, 5) project upwardly and inwardly with respect to said first reference plane (X'-X") to define said angles (α), (β) and (γ),

It is preferred that the angle (α) is from 5 to 25°. It is preferred that the angle (β) is from 5 to 35°. It is preferred that the angle (γ) is from 15 to 60°.

Preferably the first segment (4) of the head is 3 to 35 mm in length. Preferably the second segment (5) is 5 to 50 mm in length. It is further preferred that segment (5) of said replaceable head (3) has rectangular, square, circular, oval or trapezoidal cross-section. The second segment (5) defines the neck of the head (3) at an end (9) proximate said handle (2), i.e., (opposed to the bristle end), and comprises means for removable attachment with said handle (2).

Preferably the third segment (6) is 3 to 35 mm in length. The third segment (6) is between said first (4) and second (5) segment and has a reference plane 6'-6".

The reference plane (6'-6") defines an angle (α) of 1 to 30° with a reference plane 4'-4" of the first segment (4), an angle (β) of 1 to 40° with a reference plane 5'-5" of the second segment (5) and the reference plane 5'-5" of the second segment (5) forms an angle (γ) of 1 to 50° with respect to first reference plane (X'-X").

The invention also relates to a replaceable head (3) for removable attachment with a handle (2) of an electric toothbrush (1), said head (3) comprising three linear segments (4, 5, 6) angled with respect to each other, where:
i) a first segment (4) is at an end (7) remote from said handle (2) and comprises tufts of bristles (8);
ii) a second segment (5) defines the neck of said head (3) at an end (9) proximate said handle (2), and comprises means for removable attachment with said handle (2); and
iii) a third segment (6) is between said first segment (4) and second segment (5),
and where said third segment (6) forms:
a. an angle (α) of 1 to 30° with a reference plane 4'-4" of said first segment (4) abutting its lower side (4a);
b. an angle (β) of 1 to 40° with a reference plane 5'-5" of said second segment (5) abutting its lower side (5a); and,
c. an internal angle (δ) of 130 to 179° with respect to the reference plane 5'-5" of said second segment (5),
where said first and second segments (4, 5) project upwardly and inwardly with respect to said third segment (6) to define said angles (α), (β) and (δ).

Preferably the internal angle (δ) is 135 to 160°, more preferably 140 to 160°.

The invention also relates to a kit-of-parts of an electric toothbrush (1), comprising:
a) a handle (2); and,
b) a replaceable head (3) removably attachable to said handle (2), and,
c) optionally a battery, a charging cable and a set of instructions,
wherein,
said replaceable head (3) comprises comprising three linear segments (4, 5, 6) angled with respect to each other, where:
i) a first segment (4) is at an end (7) remote from said handle (2) and comprises tufts of bristles (8);
ii) a second segment (5) defines the neck of said head (3) at an end (9) proximate said handle (2), and comprises means for removable attachment with said handle (2); and
iii) a third segment (6) is between said first segment (4) and second segment (5), and where said third segment (6) forms:
   A. an angle (α) of 1 to 30° with a reference plane 4'-4" of said first segment (4) abutting its lower side (4a);
   B. an angle (β) of 1 to 40° with a reference plane 5'-5" of said second segment (5) abutting its lower side (5a); and,
   C. an internal angle (δ) of 130 to 179° with respect to the reference plane 5'-5" of said second segment (5),
where said first and second segments (4, 5) project upwardly and inwardly with respect to said third segment (6) to define said angles (α), (β) and (δ).

All preferred features of the replaceable head and the handle are already disclosed earlier.

### Figures

The invention will now be described in details with reference to the following figures, in which:

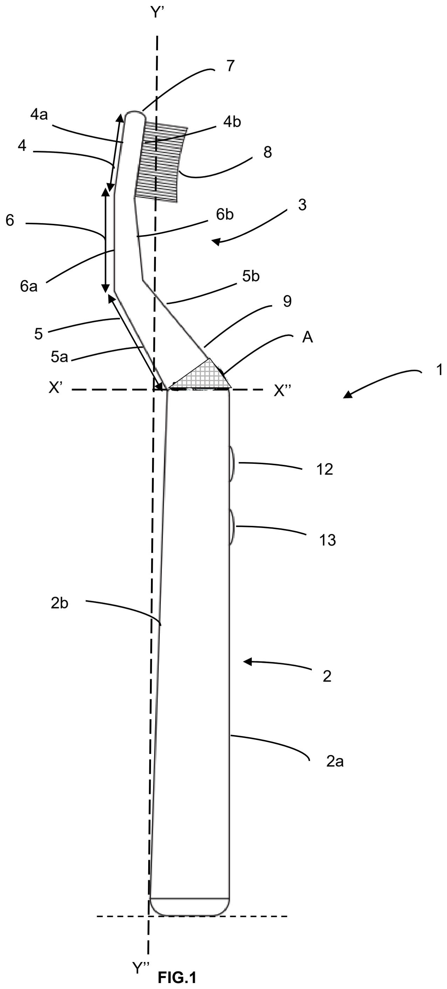

Fig.1 is an embodiment of an electric toothbrush according to the invention.
Fig.2 is an embodiment of a replaceable head according to the invention.
Fig.3 discloses handle for an electric toothbrush as part of a kit according to the invention.

### Fig.1

Seen here is an electric toothbrush (1) comprising an elongated handle (2) having upper surface (2a) and lower surface (2b). The upper surface is the one that is on the side of the bristles and the lower surface is on the lower or the opposite side of the handle.

The replaceable head (3) is attached to the handle (2) at the point marked (9) but the attachment is not visible in this figure as the attachment is concealed. The handle (2) comprises a motor (also not visible) which vibrates or oscillates the tufts of bristles (8). The handle (2) comprises an insert (10) and the second segment (5) comprises a receiving opening (11) which together are inter-engageable for said removable attachment. The features (10, 11) are not visible in this view.

In the embodiment the replaceable head (3) comprises three linear segments (4, 5, 6) angled with respect to each other. The first segment (4) is at an end (7) remote (or away or distal) from said handle (2). The first segment comprises tufts of bristles (8).

The second segment (5) defines the neck of the head (3) at an end (9) proximate (near) the handle (2). The second segment has the means for removable attachment with the handle (2).

The third segment (6) is between the first segment (4) and second segment (5).

The handle (2) is defined by a first reference plane X'-X" orthogonal (i.e., at right angles) to the handle and a second reference plane Y'-Y" abutting (i.e., touching, like the way a tangent contacts a circle) the handle at its lower surface (2b) and is perpendicular to X'-X".

This third segment (6) forms an angle (α) of 1 to 30° (here ca. 15°) with a reference plane 4'-4" of said first segment (4) abutting its lower side (4a).

Further, the third segment (6) also forms an angle (β) of 1 to 40° (herein 25°) with a reference plane 5'-5" of the second segment (5) abutting its lower side (5a). The reference plane 5'-5" of the second segment (5) abutting its lower side forms an angle (γ) of 1 to 50° (herein about 35°) with respect to the first reference plane (X'-X").

The first and second segments (4, 5) project upwardly and inwardly with respect to the first reference plane (X'-X") to define the angles (α), (β) and (γ).

The shaded portion marked as (A) may be present in the handle part (2) or alternatively included in the head part (3). The profile of the other part (2 or 3 as applicable) may be shaped correspondingly either slanting or straight.

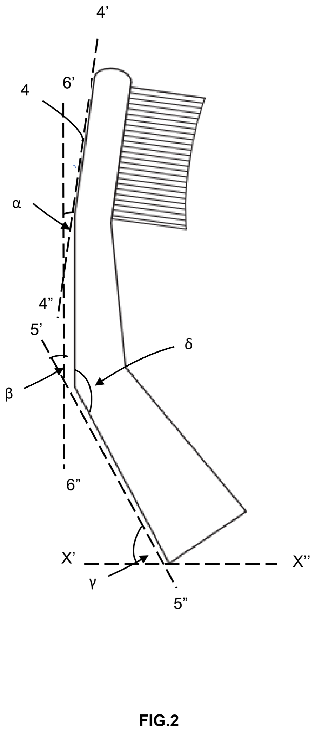

Fig.2 discloses an embodiment of a replaceable head according to the invention.

Seen here is a head (3) comprising three linear segments (4, 5, 6) angled with respect to each other.

The angles (α), (β) and (γ) are better visible and comprehensible in this figure. Further, seen in this view is also that the said third segment (6) of the head (3) forms an internal angle (δ) of 130 to 179° with respect to the reference plane 5'-5" of the second segment (5). In this figure (δ) is about 150°.

The first and second segments (4, 5) project upwardly and inwardly with respect to said third segment (6) to define said angles (α), (β) and (δ).

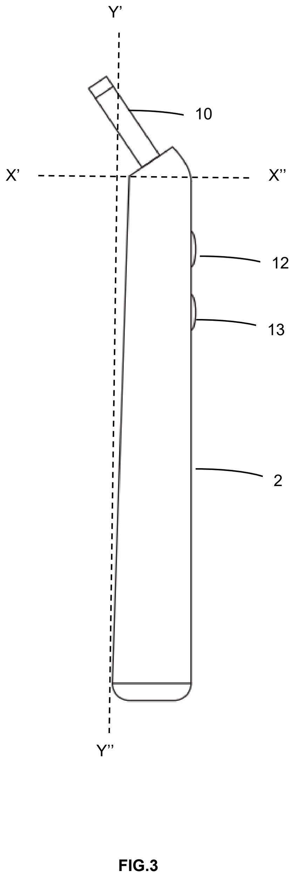

Fig.3 discloses a handle for an electric toothbrush as part of a kit according to the invention. The handle provided with plurality of buttons (12,13) meant to control the functions of the brush (1), which could be as simple as buttons for switching on/off or changing the operative mode of the brush. The handle (2) is provided with an insert (10) to inter-engageable for said removable attachment with the second segment (5) of the head (3) that comprises a receiving opening (11). The opening and head are not included in this figure.

## Claims

1. A replaceable head (3) for removable attachment with a handle (2) of an electric toothbrush (1), said head (3) comprising three linear segments (4, 5, 6) angled with respect to each other, where:
i) a first segment (4) is at an end (7) remote from said handle (2) and comprises tufts of bristles (8);
ii) a second segment (5) defines the neck of said head (3) at an end (9) proximate said handle (2), and comprises means for removable attachment with said handle (2); and
iii) a third segment (6) is between said first segment (4) and second segment (5), and where said third segment (6) forms:
A. an angle (α) of 1 to 30° with a reference plane 4'-4" of said first segment (4) abutting its lower side (4a);
B. an angle (β) of 1 to 40° with a reference plane 5'-5" of said second segment (5) abutting its lower side (5a); and,
C. an internal angle (δ) of 130 to 179° with respect to the reference plane 5'-5" of said second segment (5),
where said first and second segments (4, 5) project upwardly and inwardly with respect to said third segment (6) to define said angles (α), (β) and (δ).

2. A replaceable head (3) as claimed in claim 1 wherein, said angle (α) is from 5 to 25°.

3. A replaceable head (3) as claimed in claim 1 or 2 wherein, said angle (β) is from 5 to 35°.

4. A replaceable head (3) as claimed in any of claims 1 to 3 wherein, said internal angle (δ) is from 135 to 160°.

5. A replaceable head (3) as claimed in any of claims 1 to 4 wherein said first segment (4) is 3 to 35 mm in length.

6. A replaceable head (3) as claimed in any of claims 1 to 5 wherein said second segment (5) is 5 to 50 mm in length.

7. A replaceable head (3) as claimed in any of claims 1 to 6 wherein said third segment (6) is 3 to 35 mm in length.

8. A replaceable head (3) as claimed in any of claims 1 to 7 wherein said second segment (5) of said replaceable head (3) has rectangular, square, circular, oval or trapezoidal cross-section.

9. A replaceable head (3) as claimed in any of claims 1 to 8 wherein said second segment (5) comprises a receiving opening (11) which is inter-engageable with an insert in the handle (2) for said removable attachment.

10. A replaceable head (3) as claimed in any of claims 1 to 9 wherein second segment (5) comprises an insert (10) which is inter-engageable with a receiving opening in handle (2) for said removable attachment.

11. A kit-of-parts of an electric toothbrush (1), comprising:
a) a handle (2); and,
b) a replaceable head (3) removably attachable to said handle (2), and,
c) optionally a battery, a charging cable and a set of instructions,
wherein, said replaceable head (3) comprising three linear segments (4, 5, 6) angled with respect to each other, where:
i) a first segment (4) is at an end (7) remote from said handle (2) and comprises tufts of bristles (8);
ii) a second segment (5) defines the neck of said head (3) at an end (9) proximate said handle (2), and comprises means for removable attachment with said handle (2); and
iii) a third segment (6) is between said first segment (4) and second segment (5), and where said third segment (6) forms:
A. an angle (α) of 1 to 30° with a reference plane 4'-4" of said first segment (4) abutting its lower side (4a);
B. an angle (β) of 1 to 40° with a reference plane 5'-5" of said second segment (5) abutting its lower side (5a); and,
C. an internal angle (δ) of 130 to 179° with respect to the reference plane 5'-5" of said second segment (5),
where said first and second segments (4, 5) project upwardly and inwardly with respect to said third segment (6) to define said angles (α), (β) and (δ).
